# EUROPEAN PATENT SPECIFICATION

(11) **EP 2 815 928 B1**
(45) Date of publication and mention of the grant of the patent: **01.03.2017**
(21) Application number: 14162976.6
(22) Date of filing: 31.03.2014
(51) Int. Cl.: B60R 19/38

(54) **Bumper end portion and bumper fitted bumper end parts and tractor fitted with the bumper**
Stoßfängerendstück und Stoßfänger mit Stoßfängerendstücken und mit dem Stoßfänger ausgerüsteter Traktor
Partie d'extrémité de pare-chocs et de telles parties équipées de pare-chocs et tracteur équipé dudit pare-chocs

(30) Priority: 30.03.2013 NL 2010549; 25.08.2013 NL 2011334
(43) Date of publication of application: 24.12.2014
(73) Proprietor: Janssen, Alphons Franciscus Maria, 5131 RE Alphen (NL)
(72) Inventor: Janssen, Alphons Franciscus Maria, 5131 RE Alphen (NL)
(74) Representative: Verhees, Godefridus Josephus Maria

(56) References cited:
- FR-A5- 2 125 990
- JP-U- S5 926 080

## Description

### Field of the invention

The invention relates to a bumper end portion having a front and a rear and comprising a coupling member (6; 39) that can be affixed to a bumper middle segment (5) on an agricultural tractor (3), as well as an end portion (7) connected thereto and rotatable around an imaginary vertical hinge pin (11) to the front and to the rear.

Agricultural tractors are often equipped with a weight block which projects at the front of the agricultural tractor. This weight block may also function as a middle segment of a bumper. As a result, no complete bumper need be mounted, but fastening bumper end portions to the weight block may suffice.

### State of the art

FR 2 125 990 A5 discloses a bumper end portion according to the preamble of claim 1 and a bumper according to the preamble of claim 4. The end portions of the known bumper, when they are used on an agricultural tractor, are located at a relatively large distance from the front wheels. When negotiating a bend, the end of the bumper situated on the outside bend, makes a larger turning circle than the front wheel situated on the outside bend.

### Summary of the invention

It is an object of the invention to provide a bumper end portion of the type defined in the opening paragraph which, if the bumper end portion is mounted on an agricultural tractor, enables an agricultural tractor to make a smaller turning circle than with the known bumper. For this purpose the bumper end portion according to the invention is characterized in that the bumper end portion comprises a coupling member that can be affixed to a bumper middle segment on an agricultural tractor, as well as an end portion connected thereto and rotatable around an imaginary vertical hinge pin to the front and to the rear, seen in the direction of movement, which end portion can be secured relative to the coupling member in a position folded to the rear by means of securing means. In consequence, the tip of the bumper end portion makes a smaller turning circle than if this end portion is situated at a larger distance from the front wheels.

An important further advantage of the end portions being hinged is that if a bumper end portion catches on an obstacle (for example a pole) when the agricultural tractor is being reversed, notably when being reversed in a bend, the end portion can turn away to the front and the bumper is not damaged.

An embodiment of the bumper end portion according to the invention is characterized in that the end portion is arranged to be foldable to the front so as not to be in the way during field work.

A further embodiment of the bumper end portion according to the invention is characterized in that the end portion comprises two elements telescopic relative to each other so as to allow to be made as compact as possible during field work and so as to be capable of being turned away to the front.

The invention also relates to a bumper for an agricultural tractor comprising a bumper middle segment and on either side thereof two end portions fastened to the bumper middle segment, which end portions, when the bumper is present on an agricultural tractor, are situated in front of the front wheels of the agricultural tractor and are hingedly connected to the middle segment (5) hinged on an imaginary vertical hinge pin. With respect to the bumper the invention is characterized in that the end portions can be secured relative to the middle segment by means of securing means.

The bottom of the middle segment is preferably provided with angled surfaces so that, if the middle segment comes into contact with the ground during operation, there will be no ploughing action taking place.

The middle segment is preferably provided with bumper stays by which the bumper can be mounted to an agricultural tractor or to a carrier construction to be coupled to an agricultural tractor, which bumper stays are accordion-shaped so as to be capable of turning away and absorbing energy on collision. The bumper stays are preferably cut or lasered out of metal plates.

The bumper stays are preferably present in pairs, where the bumper stays of a pair are mounted under each other and parallel to each other.

The invention further relates to an agricultural tractor equipped with a bumper according to the invention comprising a bumper middle segment and on either side thereof two end portions fastened to the bumper middle segment. As regards the agricultural tractor the invention is characterized in that the free tips of the end portions are situated at a short distance from the front wheels of the agricultural tractor and the front of the middle segment of the bumper is situated at a larger distance from the front wheels of the agricultural tractor than the free tips of the end portions. As a result, the tips of the end portions make a smaller turning circle than if they are situated at a larger distance from the front wheels.

An embodiment of the agricultural tractor according to the invention is characterized in that the distance between the ends of the middle segment and the front wheels is smaller than the length of the end portions, so that the free tip of one of the end portions, when the end portion is turned away owing to a collision, comes into contact with the front wheel. In case of a collision the front wheel prevents the end portion from turning further away so that a vehicle colliding with the agricultural tractor cannot slip under the agricultural tractor.

A further embodiment of the agricultural tractor according to the invention is characterized in that the bumper stays are connected to an arm construction and are situated near the bottom of the agricultural tractor at a level under that of the head lights and the towing eye of the agricultural tractor. This arm construction keeps the bumper near the bottom of the agricultural tractor at a level under that of the head lights and the towing eye of the agricultural tractor, so that the light beam of the head lights is not shielded by the bumper and during a towing operation the bumper is not in the way of a towing cable or towing rod.

### Brief description of the drawings

The invention will be described below in more detail based on an example of embodiment of the bumper according to the invention represented in the drawing figures, in which:
Fig. 1 shows a top plan view of an embodiment of the bumper according to the invention fastened to an agricultural tractor;
Fig. 2 shows the turning circles of the bumper according to the invention relative to those of the known bumper;
Fig. 3 shows the bumper with end portions turned away to the front;
Fig. 4 shows an embodiment of a loose bumper end portion which can be mounted to a weight block;
Fig. 5 shows a rear view of a part of the bumper where the securing of one of the end portions to the middle segment is visible;
Fig. 6 shows an embodiment of the securing means for securing the end portion to the middle segment;
Fig. 7 shows a further embodiment of the securing means for securing the end portion to the middle segment in a decoupled state;
Figs. 8 - 11 show a further embodiment of the securing means for securing the end portion to the middle segment;

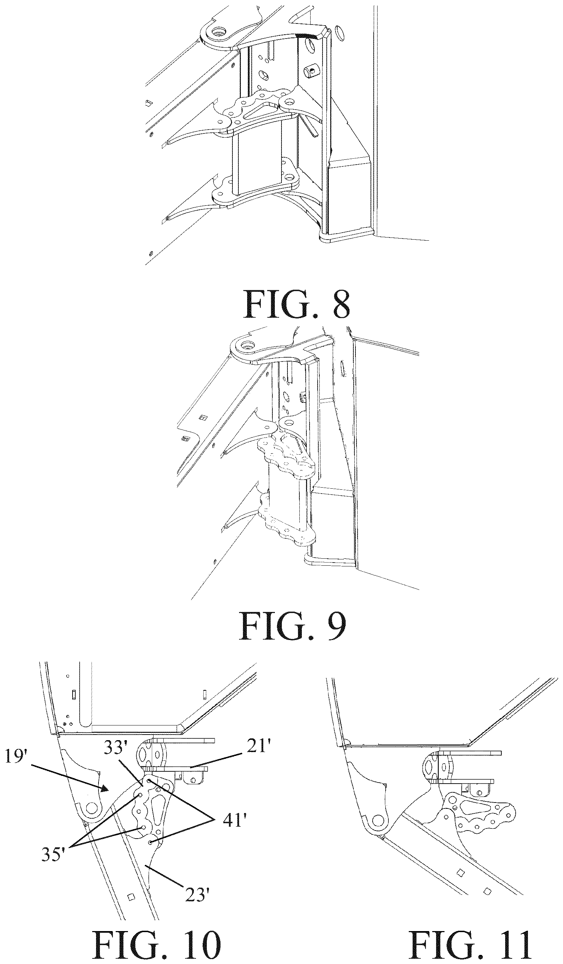

Fig. 8 shows the bumper with bumper stays shortly before it is coupled to the arm construction of the agricultural tractor;
Fig. 9 shows the bumper with bumper stays in a state coupled to the arm construction;
Fig. 10 shows an alternative embodiment of the bumper stays where the bumper stays are present in pairs;
Fig. 11 shows a cross section of the middle segment of the bumper with the angled surfaces at the bottom clearly visible;

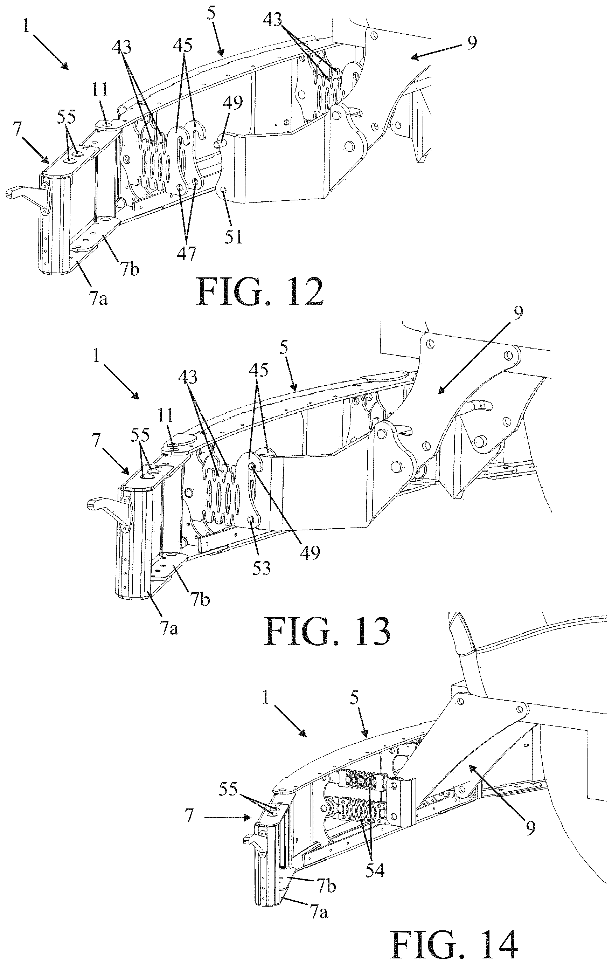

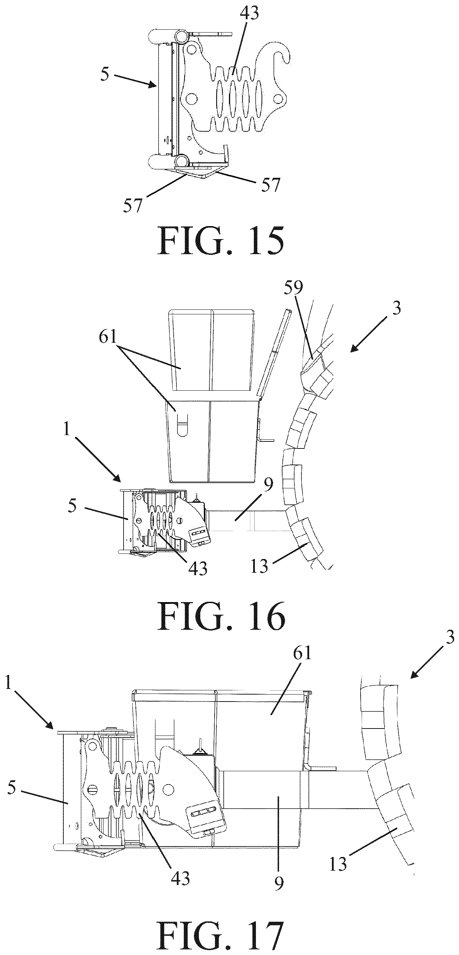

Fig. 12 shows the bumper in the state coupled to the agricultural tractor for illustrating the level of the bumper relative to the front wheels of the agricultural tractor; and
Fig. 13 shows the bumper and the arm construction with a tool box suspended in this arm construction.

### Detailed description of the drawings

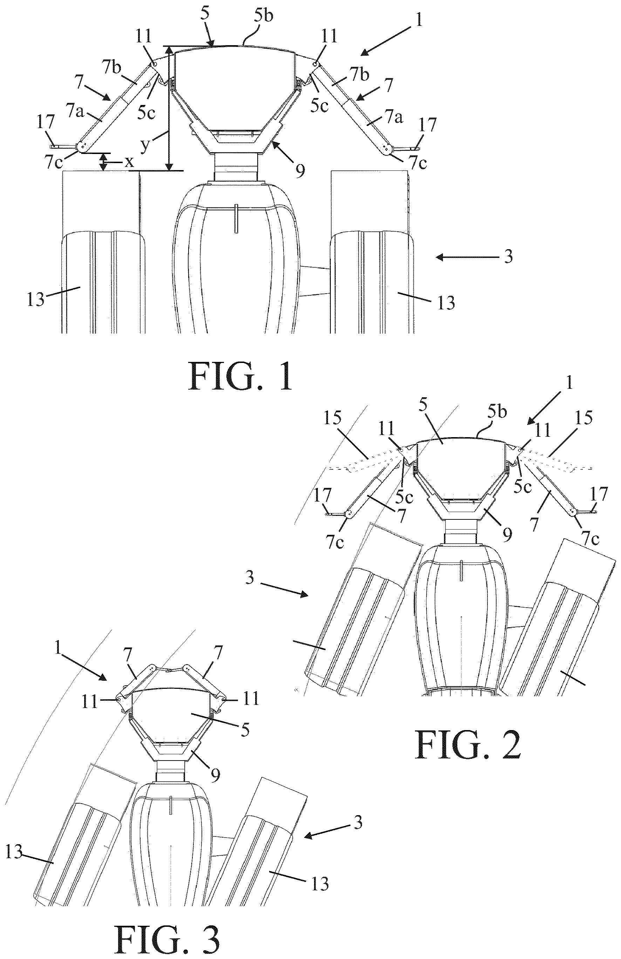

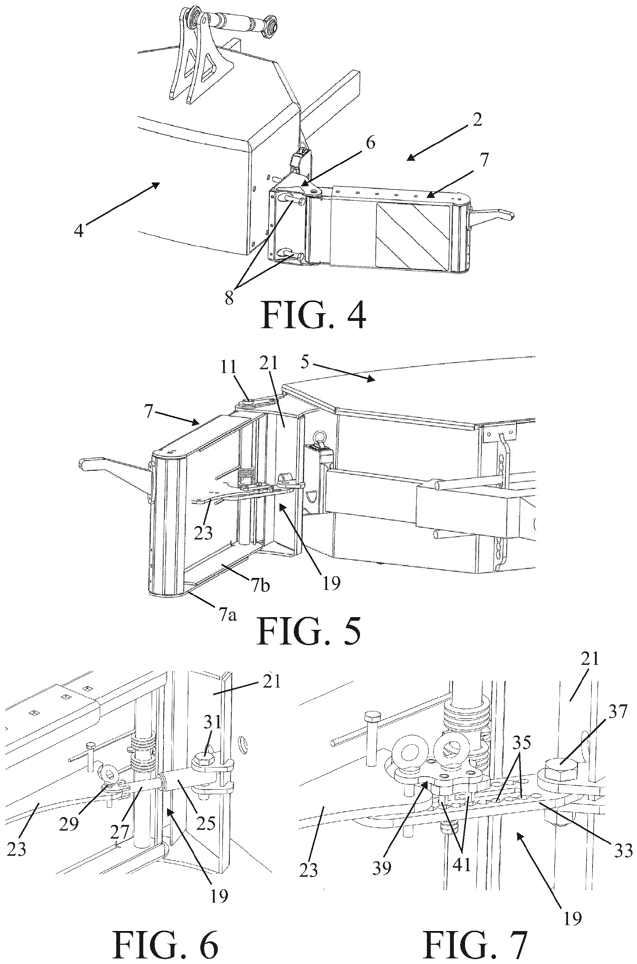

Fig. 1 shows a top plan view of an embodiment of the bumper 1 according to the invention fastened to an agricultural tractor 3. The bumper comprises a middle segment 5 having on either side end portions 7 connected to the middle segment. The middle segment is connected to the agricultural tractor by means of an arm construction 9. The end portions are connected to the middle segment by means of vertical hinge pins 11 (they may also be two separate hinges at the top or bottom respectively of the bumper, which are formed by bolts projecting through openings in the bumper) and are secured relative to the middle segment by means of securing means (see Figs. 4 - 7). Each end portion comprises two parts 7a and 7b which are telescopic relative to each other and can therefore be varied in length.

By turning the end portions 7 relative to the middle segment 5 and adjusting the end portions 7 to length, the bumper 1 can be brought to a position relative to the agricultural tractor 3 as is shown in Fig. 1. In this position the end portions 7 are situated at a small distance from the front of the front wheels 13 of the agricultural tractor. The front 5b of the middle segment of the bumper is situated at a larger distance y from the front wheels 13 than the free tips 7c of the end portions, distance x in Fig. 1. As a result, the tips 7c of the end portions make a smaller turning circle than if they are situated at a larger distance from the front wheels. This is illustrated in Fig. 2 in which the positions of the end portions 15 of the known bumper are indicated by means of broken lines. When a bend is negotiated, the turning circle of the free tips 15c of the known bumper is larger than that of the bumper according to the invention. The free tips of the end portions have been provided with lights or reflectors 17.

Furthermore, the distance between the ends 5c of the middle segment and the front wheels 13 is smaller than the length of the end portions 7. In consequence, the free tip 7c of the end portion, when the end portion is turned away owing to a collision, will come into contact with the front wheel 13. In the event of a collision the front wheel prevents the end portion from turning further away so that a vehicle colliding with the agricultural tractor cannot end up under the agricultural tractor.

The construction of the hinged connection between the middle segment and the end portions is arranged such that the end portions 7 can be folded away to the front so as not to be in the way during field work. Fig. 3 shows for illustrative purposes the bumper 1 with folded away end portions 7.

Fig. 4 shows a disconnected bumper end portion 2 which can be fastened to a weight block 4 already mounted on an agricultural tractor. In this case this weight block functions as a middle segment of the bumper. The bumper end portion 2 comprises a coupling member 6 which in this embodiment is releasably connected to the weight block 4 by means of bolts 8, as well as an end portion 7 which has a hinged connection to the coupling member 6.

Figs. 5 to 7 show various embodiments of the securing means 19 by which the end portions are secured to the middle segment of the bumper. Fig. 5 shows a rear view of a part of the bumper, so that the securing of one of the portions 7 to the middle segment 5 is clearly visible. For the purpose of this securing the middle segment has plates 21 near the ends and stays 23 are mounted near the middle on the end portions. The distance between these plates and stays can be adjusted and secured by means of the securing means 19.

In the construction shown in Fig. 6 the securing means 19 are formed by a sleeve 25 containing a rod 27 which can rotate in this sleeve. By turning the rod into or out of the sleeve it is possible to adjust the distance between the plate 21 mounted on the middle segment and the stay 23 mounted on the end portion. The free ends of the sleeve and the rod have a hinged connection to the plate or stay respectively, by means of coupling pins 29 and 31.

In the construction shown in Fig. 7 the securing means 19 are formed by a strip 33 punched with holes 35, which strip is rotatably connected at one end via a bolt 37 to the plate 21 mounted on the middle segment, and is connected to the end portion via a coupling member 39 rotatably connected to the stay 23. The strip 33 may then shift relative to the coupling member 39 and be secured by the pins 41 in a number of different positions relative to the coupling member. In this manner the distance between the plate 21 mounted on the middle segment and the stay 23 mounted on the end portion can be adjusted here also, be it not in a stepless way as is the case with the construction shown in Fig. 5, but in steps.

Figs. 8 and 9 show the coupling of the arm construction 9 of the agricultural tractor to the bumper 1. To the middle segment 5 of the bumper are fastened in pairs bumper stays 43 by which the bumper can be mounted to an agricultural tractor or to a carrier construction to be coupled to the agricultural tractor. These bumper stays 43 have an accordeon shape as a result of which they form at the same time energy absorbing means for absorbing collision energy in case of a collision.

The tops of the free tips of the bumper stays 43 are provided with a hook 45 and the bottoms of the free tips are provided with a hole 47. The free tip of the arm construction has a pin 49 at the top which can be caught on a hook at the bottom of a further hole 51. During the coupling operation first the pin 49 is lodged behind the hooks 45 after which a loose pin 53 is inserted through the holes in the ends of the bumper stay and the arm construction.

Fig. 10 shows an alternative embodiment of the bumper stays. In this Figure the bumper stays 54 are present in pairs under each other in lieu of beside each other. Here too the bumper stays are parallel to each other. In these Figs. 8 - 10 it is also clearly visible that the two parts 7a and 7b of the end portions 7 can be shifted relative to each other and can be fastened relative to each other by means of pins or bolts 55.

Fig. 11 shows the middle segment 5 of the bumper in a cross-sectional view. This Figure distinctly shows that the bottom of the bumper has angled surfaces 57, so that if the bumper comes into contact with the ground during operation, there will be no plow action taking place.

In Figs. 12 and 13 is shown the bumper 1 in a position coupled to the agricultural tractor 3, where especially the position of the bumper is clearly visible in vertical direction relative to the agricultural tractor. The bumper is shown in a cross-sectional view here to distinctly show the coupling to the agricultural tractor. The bumper stays 43 are connected to the arm construction 9 which forms part of or can be coupled to the agricultural tractor. This arm construction retains the bumper near the bottom of the agricultural tractor at a level below that of the head lights 59 and the towing eye (not shown in the Figures) of the agricultural tractor, so that the light beam of the head lights is not shielded by the bumper and during a towing operation the bumper is not in the way of a towing cable or towing rod.

These Figures also give a clear picture of the distance between the middle segment 5 of the bumper and the front wheels 13 of the agricultural tractor. This distance is such that possibly a tool box 61 can be suspended in the arm construction 9 between the bumper and the front of the agricultural tractor.

## Claims

1. A bumper end portion (2) having a front and a rear and comprising a coupling member (6; 39) that can be affixed to a bumper middle segment (5) on an agricultural tractor (3), and an end portion (7) connected thereto and rotatable around an imaginary vertical hinge pin (11) to the front and to the rear, as well as securing means (19), **characterized in that** the end portion (7) can be secured relative to the coupling member (6; 39) in a position folded to the rear by means of the securing means (19).

2. A bumper end portion (2) as claimed in claim 1, **characterized in that** the end portion (7) is arranged to be foldable to the front.

3. A bumper end portion (2) as claimed in claim 1 or 2, **characterized in that** the end portion (7) comprises two elements (7a, 7b) telescopic relative to each other.

4. A bumper (1) for an agricultural tractor comprising a bumper middle segment (5) and on either side thereof two end portions (7) fastened to the bumper middle segment, which end portions, when the bumper is present on an agricultural tractor (3), are situated in front of the front wheels (13) of the agricultural tractor, and are hingedly connected to the middle segment (5) hinged on an imaginary vertical hinge pin (11), as well as securing means (19), **characterized in that** the end portions (7) can be secured relative to the middle segment by means of the securing means (19).

5. A bumper (1) as claimed in claim 4, **characterized in that** the bottom of the middle segment (5) is provided with angled surfaces (57).

6. A bumper (1) as claimed in claim 4 or 5, **characterized in that** bumper stays (43; 54) are attached to the middle segment (5) by which stays the bumper can be mounted to an agricultural tractor (3) or to a carrier construction to be coupled to an agricultural tractor, which bumper stays (43; 54) are accordion-shaped.

7. A bumper (1) as claimed in claim 6, **characterized in that** the bumper stays (54) are present in pairs, where the bumper stays of a pair are mounted under each other and parallel to each other.

8. An agricultural tractor (3) equipped with a bumper (1) as claimed in claim 4, 5, 6 or 7, comprising a bumper middle segment (5) and on either side thereof two end portions (7) fastened to the bumper middle segment, **characterized in that** the free tips (7c) of the end portions (7) are situated at a short distance from the front wheels (13) of the agricultural tractor (3) and the front (5b) of the middle segment (5) of the bumper is situated at a larger distance from the front wheels (13) of the agricultural tractor than the free tips (7c) of the end portions.

9. An agricultural tractor (3) as claimed in claim 8, **characterized in that** the distance between the ends (5c) of the middle segment (5) and the front wheels (13) is smaller than the length of the end portions (7), so that the free tip (7c) of one of the end portions, when the end portion is turned away owing to a collision, comes into contact with the front wheel (13).

10. An agricultural tractor (3) as claimed in claim 7 or 8, **characterized in that** the bumper stays (23; 43; 54) are connected to an arm construction (9) and are situated near the bottom of the agricultural tractor (3) at a level under that of the head lights (59) and the towing eye of the agricultural tractor.

## Patentansprüche

1. Stoßstangenendteil (2), versehen mit einer Vorderseite und einer Rückseite und ein mit einem Stoßstangenmittelteil (5) an einen Ackerschlepper (3) anschließbares Kuppelstück (6; 39) enthaltend, und ein um eine imaginäre vertikale Gelenkachse (11), gesehen in Fahrtrichtung, nach vorn und nach hinten verdrehbar damit verbundenes Endteil (7), sowie Fixiermittel (19), **dadurch gekennzeichnet, dass** das Endteil (7) in Bezug auf das Kuppelstück (6; 39) mindestens in einer nach hinten verdrehten Stellung mittels der Fixiermittel (19) fixiert werden kann.

2. Stoßstangenendteil nach Anspruch 1, **dadurch gekennzeichnet, dass** das Endteil (7) nach vorn wegklappbar ausgeführt ist.

3. Stoßstangenendteil nach Anspruch 1 oder 2, **dadurch gekennzeichnet, dass** das Endteil (7) zwei in Bezug zueinander ein- und ausschiebbare Teile (7a, 7b) enthält.

4. Stoßstange (1) für einen Ackerschlepper, ein Stoßstangenmittelteil (5) enthaltend mit beidseitig zwei Endteile (7), die am Stoßstangenmittelteil befestigt sind, welche sich, bei Anwesenheit der Stoßstange an einem Ackerschlepper (3), vor den Vorderrädern (13) des Ackerschleppers befinden, und gelenkig um eine imaginäre vertikale Gelenkachse (11) mit dem Mittelteil (5) verbunden sind, sowie Fixiermittel (19), **dadurch gekennzeichnet, dass** die Endteile (7) in Bezug auf das Mittelteil mittels der Fixiermittel (19) fixiert werden können.

5. Stoßstange nach Anspruch 4, **dadurch gekennzeichnet, dass** die Unterseite des Mittelteils (5) schräge Flächen (57) hat.

6. Stoßstange nach Anspruch 4 oder 5, **dadurch gekennzeichnet, dass** am Mittelteil (5) Stoßstangenstützen (43; 54) befestigt sind, mit denen die Stoßstange an einen Ackerschlepper (3) oder an einem mit einem Traktor zu verbindenden Stützgerüst befestigt werden kann, welche Stoßstangenstützen (43; 54) eine Harmonikaform haben.

7. Stoßstange nach Anspruch 6, **dadurch gekennzeichnet, dass** die Stoßstangenstützen (54) paarweise vorhanden sind, wobei die Stoßstangenstützen eines Paares untereinander und parallel aneinander sind.

8. Ackerschlepper (3), versehen mit einer Stoßstange (1) nach Anspruch 4, 5, 6 oder 7, ein Stoßstangenmittelteil (5) enthaltend und an jeder Seite davon zwei Endteile (7), die mit dem Stoßstangenmittelteil verbunden sind, **dadurch gekennzeichnet, dass** sich die freien Enden (7c) der Endteile (7) in der Nähe der Vorderräder (13) des Ackerschleppers (3) befinden und die Vorderseite (5b) des Mittelteils (5) der Stoßstange sich in einem größeren Abstand von den Vorderrädern (13) des Ackerschleppers (3) befindet als die freien Enden (7c) der Endteile.

9. Ackerschlepper (3) nach Anspruch 8, **dadurch gekennzeichnet, dass** der Abstand zwischen den Enden (5c) des Mittelteils (5) und der Vorderräder (13) kleiner ist als die Länge der Endteile (7), sodass das freie Ende (7c) von einem der Endteile bei Verdrehung des Endteils infolge einer Kollision mit dem Vorderrad in Berührung kommt.

10. Ackerschlepper (3) nach Anspruch 7 oder 8, **dadurch gekennzeichnet, dass** die Stoßstangenstützen (23; 43; 54) mit einer Armkonstruktion (9) verbunden sind und sich nahe der Unterseite des Ackerschleppers (3) auf einer Ebene unter der der Scheinwerfer (59) und der Abschleppöse des Traktors befinden.

## Revendications

1. Partie d'extrémité de pare-chocs (2) pourvue d'une face avant et d'une face arrière et comprenant une pièce de raccordement (6; 39) pouvant être reliée à une partie médiane de pare-chocs (5) sur un tracteur agricole (3), et une partie d'extrémité (7) y étant reliée, pouvant tourner autour d'un axe de pivot vertical imaginaire (11) vu dans le sens de la marche vers l'avant et l'arrière, ainsi que des moyens de fixation (19), **caractérisée en ce que** la partie d'extrémité (7) peut être fixée, à l'aide des moyens de fixation (19), au moins dans une position tournée vers l'arrière par rapport à la pièce de raccordement (6; 39).

2. Partie d'extrémité de pare-chocs selon la revendication 1, **caractérisée en ce que** la partie d'extrémité (7) est réalisée de façon à être rabattable vers l'avant.

3. Partie d'extrémité de pare-chocs selon la revendication 1 ou 2, **caractérisée en ce que** la partie d'extrémité (7) comprend deux parties (7a, 7b) pouvant glisser l'une dans l'autre de façon extensible.

4. Pare-chocs (1) pour un tracteur agricole, comprenant une partie médiane de pare-chocs (5) ayant des deux côtés deux parties d'extrémité (7) attachées à la partie médiane de pare-chocs, lesquelles parties d'extrémité se trouvent, en présence du pare-chocs sur un tracteur agricole (3), devant les roues avant (13) du tracteur agricole, et sont articulées sur la partie médiane (5) autour d'un axe de pivot vertical imaginaire (11), ainsi que des moyens de fixation (19), **caractérisé en ce que** les parties d'extrémité (7) peuvent être fixées par rapport à la partie médiane à l'aide de moyens de fixation (19).

5. Pare-chocs selon la revendication 4, **caractérisé en ce que** le dessous de la partie médiane (5) est pourvu de faces obliques (57).

6. Pare-chocs selon la revendication 4 ou 5, **caractérisé en ce que** des supports de pare-chocs (43; 54) sont fixés à la partie médiane (5), grâce à quoi le pare-chocs peut être fixé à un tracteur agricole (3) ou à une structure portante étant accouplée à un tracteur, lesquels supports de pare-chocs (43; 54) ont une forme en accordéon.

7. Pare-chocs selon la revendication 6, **caractérisé en ce que** les supports de pare-chocs (54) sont présents par paires, où les supports de pare-chocs d'une paire se trouvent l'un sous l'autre et sont parallèles l'un à l'autre.

8. Tracteur agricole (3) pourvu d'un pare-chocs (1) selon la revendication 4, 5, 6 ou 7, comprenant une partie médiane de pare-chocs (5) et de chaque côté de celle-ci deux parties d'extrémité (7) qui sont reliées à la partie médiane de pare-chocs, **caractérisé en ce que** les extrémités libres (7c) des parties d'extrémité (7) se trouvent près des roues avant (13) du tracteur agricole (3) et **en ce que** la face avant (5b) de la partie médiane (5) du pare-chocs se trouve à une distance plus grande des roues avant (13) du tracteur agricole (3) que les extrémités libres (7c) des parties d'extrémité.

9. Tracteur agricole (3) selon la revendication 8, **caractérisé en ce que** la distance entre les extrémités (5c) de la partie médiane (5) et les roues avant (13) est plus petite que la longueur des parties d'extrémité (7), de telle sorte que, lors d'une contorsion de la partie d'extrémité faisant suite à une collision, l'extrémité libre (7c) de l'une des parties d'extrémité entre en contact avec la roue avant.

10. Tracteur agricole (3) selon la revendication 7 ou 8, **caractérisé en ce que** les supports de pare-chocs (23; 43; 54) sont reliés à une structure en bras (9) et se trouvent près du dessous du tracteur agricole (3) à un niveau situé sous celui des phares (59) et du crochet de remorquage du tracteur.
